# EUROPÄISCHE PATENTSCHRIFT

(11) **EP 2 325 289 B1**
(45) Veröffentlichungstag und Bekanntmachung des Hinweises auf die Patenterteilung: **22.08.2012**
(21) Anmeldenummer: 10000551.1
(22) Anmeldetag: 20.01.2010
(51) Int. Cl.: C10L 5/44

(54) **Verfahren und Vorrichtung zur Bearbeitung eines Trockenbrennstoffes**
Method and device for processing a solid fuel
Procédé et dispositif pour le traitement d'un combustible solide.

(30) Priorität: 10.11.2009 DE 102009052643
(43) Veröffentlichungstag der Anmeldung: 25.05.2011
(73) Patentinhaber: FireStixx Holz-Energie GmbH, 84137 Vilsbiburg (DE)
(72) Erfinder: Blieninger, Franz, 84137 Vilsbiburg (DE)
(74) Vertreter: Winter, Brandl, Fürniss, Hübner, Röss, Kaiser, Polte - Partnerschaft

(56) Entgegenhaltungen:
- EP-A1- 1 288 143
- EP-A1- 1 837 390
- WO-A1-02/50220
- GB-A- 347 169
- US-A- 2 097 914
- US-A- 2 197 792

## Beschreibung

Die vorliegende Erfindung betrifft ein Verfahren und eine Vorrichtung zur Bearbeitung eines Trockenbrennstoffes, insbesondere eines Holzpellets nach dem Oberbegriff des Anspruchs 1 und 4.

In der holzverarbeiteten Industrie fallen große Mengen an Sägenebenprodukten an. So ist ein Baumstamm nur etwa zu 60 % seines Volumens zu einer Hauptware umzusetzen, die restlichen 40 % sind im weitesten Sinn als Abfall zu bezeichnen. Darunter fallen in erster Linie Sägespäne, Hobelspäne und Hackschnitzel, aus denen Holzpellets üblicherweise hergestellt werden. Ein solcher stäbchenförmiger Holzpellet hat beispielsweise einen Durchmesser zwischen 4 mm und 10 mm, ist zwischen 5 mm und 50 mm lang, besitzt eine Rohdichte etwa 1,1 bis 1,3 kg/dm³, und hat eine Energiedichte von etwa 5 kWh/kg. Die Herstellung der Pellets erfolgt in einer bekannten Ring- oder Flachmatrizenpresse, in der Kollerrollen das Pressgut durch die Bohrungen der Matrize drücken. Eine wesentliche Voraussetzung für hochwertige Pellets ist ein möglichst feines Ausgangsmaterial. So werden die getrockneten Holzspäne vor Eingang in die Pressen über schnelllaufende Hammermühlen fein gemahlen. In den Pressen dann werden die Holzspäne in einem kombinierten Mahl- und Pressvorgang durch die Drehbewegungen von Koller und Matrize über hohe Scherkräfte noch feiner vermahlen, und durch die Presskanäle der Matrize gedrückt. Dabei treten Temperaturen von über 120 °C und sehr hohe Drücke auf. Die Drücke sind dabei an den Wandungen der Kanäle am höchsten. Der spezifische Energieaufwand für Holzpellets ist gegenüber beispielsweise Futtermittelpellets um den Faktor 3-5 höher.

Als Folge weist die zylindrische Oberfläche der Pellets eine extrem hohe Dichte bei glatter Oberfläche aufweist. Der Randbereich ist also im Wesentlichen hart, aber spröde. Nach dem Durchgang der Pellets durch die Kanäle werden sie abgeschnitten, und fallen danach in den Kühler, wo die Pellets durch Abgabe von Wasserdampf an die durchströmende Luft noch mal etwa 2%-3% Feuchte verlieren, weiter abkühlen und oberflächlich aushärten. Dabei bleibt die Kerntemperatur der Presslinge in den Lagersilo noch etwa 1-3 Wochen gegenüber der Oberflächentemperatur erhöht. Diese Faktoren führen zusammen zu einigen Eigenarten bei Holzpellets: So bestehen die fertigen Pellets zu einem großen Teil aus feinstem Holzmehl. Eine durchschnittliche Fraktionierung von 6 mm Pellets sieht etwa wie folgt aus:

| | | |
|---|---|---|
| < | 3,15 mm | 98,00 % |
| < | 2,0 mm | 95,00 % |
| < | 1 mm | 63,00 % |
| < | 0,5 mm | 25,00 % |

Die Zahlen verdeutlichen, wie fein die Partikelgrößen innerhalb der Pellets vorliegen.

Holzpellets für Heizzwecke weisen eine Restfeuchte von etwa 6 % bis maximal etwa 10 % auf. Dieser für Holz sehr niedrige Feuchtegehalt ist bei Heizpellets notwendig, um eine hohe Energiedichte bei gutem Zündverhalten zu gewährleisten. Dabei ist der Feuchtegehalt an den zylindrischen Oberflächen niedriger als in den Kernbereichen. Dies führt dazu, dass die zylindrische Oberfläche schrumpft, und durch den extrem niedrigen Wassergehalt sehr spröde und brüchig wird, und unter Zugspannungen steht. Die Stärke als Presshilfsmittel bildet zudem eine sogenannte Presshaut an der Zylindrischen Oberfläche der Pellets, welche durch den hohen Trockengehalt ebenso brüchig und spröde ist. Durch die ungleiche Druckverteilung im Presskanal ist die Stoffdichte über den Querschnitt der Pellets ungleichmäßig verteilt. Die Dichte nimmt vom Mittelpunkt ausgehend radial in Richtung zu der zylindrischen Oberfläche zu. Diese Faktoren, in Addition mit dem hohen Staubanteil führen dazu, dass Holzpellets naturgemäß dazu neigen, bei jeder Manipulation relevante Mengen an Abrieb in Form von Bruch und Staub zu erzeugen.

Holzpellets für Heizzwecke werden zum Endverbraucher auf zwei Wege geliefert. Einmal als Sackware auf Paletten, meist zur Verwendung in Pellets-Kaminöfen. Zum Zweiten als lose Ware, zur Verwendung in Zentralheizungen, im üblichen Leistungsbereich zwischen 10 kW und 1.000 kW. Die lose Ware wird üblicherweise mit Silo LKW zum Kunden angeliefert und über ein Drucksystem (Tank + Kompressor) über Schlauchleitungen eingeblasen. Diese Technik ist seit Jahrzenten bekannt und bewährt. Über Silo-Tank-LKW werden beispielsweise Getreidemehle, Futtermittel und Granulate aller Art transportiert und in die vorgesehenen Lagerbehälter eingeblasen.

Bei diesen bekannten Anwendungen ist das zu fördernde Gut entweder bereits in Staubform (Mehl), oder die Neigung zur Staubbildung ist wesentlich geringer ausgeprägt als bei Holzpellets. (Beispiel: Futtermittel, welche wegen dem Öl-/Fettgehalt wesentlich elastischer sind, nicht so hochverdichtet sind, keine Materialspannungen wie Holzpellets aufweisen, weniger Feinstoff enthalten, und bereits Feinanteil bindende Eigenschaften mitbringen).

Bei Holzpellets wird die überschüssige Luft über ein Absauggebläse aus dem zu befüllenden Pelletslager (Sacksilo, Lagerraum) abgesaugt. Der Lagerraum hat also zwei meist 100 mm starke Anschlüsse. Einen zum Einblasen, und einen für die Absaugung. Einblaslängen von 20 Metern sind üblich, bis zu 50 Meter technisch machbar. Es können Blashöhen von bis zu 30 Meter vertikal überwunden werden. Beim Einblasen werden die Holzpellets mechanisch stark belastet, in Abhängigkeit der Schlauchlängen und örtlichen Verhältnisse. Dadurch entsteht wegen der beschriebenen Materialeigenschaften von Holzpellets sogenannter Abrieb in Form von Holzstaub und Bruch. Auch haftet den Holzpellets naturgemäß ein gewisser Staubanteil an, welcher durch die Bewegung und Luftströmung beim Einblasen frei wird. Das Absauggebläse hat, um der starken Staubbelastung vorzubeugen, einen Filtersack nachgeschaltet. Ein großer Teil des entstehenden Feinstaubes bleibt aber auch im Lager, speziell in Zonen, wo sich die Luftströmung beruhigen kann oder zirkuliert, auf, und in den Hohlräumen zwischen den Pellets liegen. Hier können sich zusätzlich sogenannte "Staubnester", also Bereich mit erhöhtem Feinanteil bilden. Weiter wird in der Blasleitung sogenannter Bruch erzeugt. Es sind verdichtete Körner in der Größe von etwa 0,1 mm bis 3,15 mm. (Partikel > 3,15 mm gelten laut DIN Norm nicht mehr als Feinanteil). Ein hoher Staub- und Bruchanteil verschlechtert das Fließverhalten der Pellets im Lager und in den Fördereinrichtungen zur eigentlichen Pelletheizung, kann zu Verstopfungen in Förderschnecken führen, verursacht bei den weit verbreiteten Vakuumsystemen eine unangenehme Feinstaubbelastungen in den Keller- und Wohnräumen, verschlechtert das Zündverhalten im Brenner, der Feinstaubanteil auch in den Rauchgasen kann als Folge zunehmen, die Verbrennung verschlechtert sich allgemein (schlechtere Luftführung im Primärluftbereich), und führt insgesamt zu einer Verschlechterung des Kessel-Wirkungsgrades.

Aus der DE 39 18 523 C2 ist ein Verfahren zur Verhinderung einer Staubbildung beim Verladen oder Transportieren von Dünger-Granulaten dargestellt, bei dem als Staubbindemittel ein flüssiges Gemisch aus Melasse und Glyzerin bzw. Polyethylenglykol bzw. Triethanolamin als zweite organische Substanz zugesetzt werden. Derartige Zusätze sind bei einem Brennstoff wegen der toxischen Wirkung dieser Substanzen bei der Verbrennung indiskutabel.

WO 02/50220 beschreibt ein Verfahren und eine Vorrichtung zur Herstellung von staubfreien Brennstoffpellets. Hierbei werden die Pellets während des Herabfallens in einen Silobehälter vorzugsweise mit einem Öl eingesprüht.

Der vorliegenden Erfindung liegt die Aufgabe zugrunde, eine umweltverträgliche und dabei kostengünstige Lösung zur Bearbeitung eines Trockenbrennstoffes, insbesondere eines Holzpellet zu erreichen, welche die Trockenbrennstoffe widerstandsfähiger gegenüber mechanischer Belastung macht.

Diese Aufgabe wird durch das im Anspruch 1 angegebene Verfahren gelöst.

Der erfindungsgemäße Vorteil liegt darin, dass der Oberfläche des Trockenbrennstoffes staubbindende Eigenschaften verliehen wird, und zugleich das Fließverhalten und dadurch die Transportierbarkeit der Brennstoffe erheblich verbessert, und die Materialspannungen gesenkt, sowie die Oberfläche der Brennstoffe elastischer gemacht wird.

Eine vorteilhafte Weiterführung der Erfindung besteht darin, in die Blasleitung einen Sprühnebel zuzugeben, welcher mit den Holzpellets kollidiert, und diese mit einem dünnen Ölfilm bzw. Emulsionsschicht umgibt. Auch die Staubpartikel können mit Tröpfchen des Additivs kollidieren, und sich im Weiteren an größere Holzpellets binden.

Ein wichtiger Effekt bei der Erfindung besteht darin, dass durch die Senkung der Oberflächenspannungen und Erhöhung der Oberflächenelastizität weniger Abrieb bei der Manipulation der Pellets überhaupt entsteht. Dieser Effekt konnte neben Feldversuchen mit einem Silo-Blas-LKW auch über den sogenannten Abriebtest nachgewiesen werden. Der Abriebtest beschreibt ein in der Pelletbranche verbreitetes, und von der DIN vorgeschriebenes standardisiertes Verfahren zur Prüfung der mechanischen Abriebfestigkeit von Holzpellets. Dabei werden 100 g Pellets für 1 Minute in einem definierten Luftstrom umher gewirbelt, und danach der erzeugte Feinanteil zurück gewogen. Abriebwerte von 1-2% sind die Regel. Durch die Oberflächenbehandlung der Pellets konnte der Abrieb gesenkt werden.

Ein zweiter Effekt ist die Entfernung von Staub dadurch, dass die Pellets über das Einsprühen des Additivs mit einer leicht klebrigen, mindestens staubbindenden Schicht überzogen sind, und sich die Staubpartikel an diese Oberfläche binden können. Von eher untergeordneter Bedeutung ist dabei der Effekt, dass sich kleine Staubpartikel durch gegenseitige Kollision selbst zu größeren Partikeln verbinden. Der an die Pellets anhaftende Staub wird durch das Coating am "sich Ablösen" gehindert. Es ist also wesentlich, dass die Oberfläche der Pellets mit einer staubbindenden Schicht überzogen ist.

Ein positiver Nebeneffekt bei der Verwendung von Ölen, Wachsen oder Harzen ist, dass die automatische Zündung durch den Brenner etwas erleichtert wird.

Als Sprühflüssigkeit kann prinzipiell jede sprühfähige Substanz dienen, welche die Materialspannungen reduziert, die Elastizität erhöht, staubbindende Eigenschaften aufweist, den Heizwert nicht oder nur unwesentlich erhöht, und keine nachteiligen Eigenschaften bei der Verbrennung mit sich bringt. Idealerweise sollte das Additiv aber folgende Eigenschaften aufweisen:
1. Die Materialspannungen senken bzw. die Oberflächenelastizität erhöhen
2. Die Innenflächen von Blasleitungen, Schneckenwendeln und Förderspiralen schmieren
3. staubbindende Eigenschaften haben
4. eine niedrige Oberflächenspannung aufweisen
5. Keine die Verbrennung verschlechternde Eigenschaften haben, oder schädliche Abgase erzeugen
6. kostengünstig und
7. natürlichen Ursprungs sein

Von Vorteil ist vorgesehen, dass das umhüllende Additiv ein Öl, und/oder ein geschmolzenes oder flüssiges Wachs und/oder ein Fett aufweist. Einige Öle weisen dabei die besten Eigenschaften auf. Zu beachten ist dabei aber ganz besonders eine möglicherweise unerwünschte Erhöhung des Heizwertes. Der Hintergrund ist dabei, dass die gängigen Heizanlagen auf den Energiegehalt von Holz bei einem Feuchtegehalt von etwa 6 - 10 % eingestellt sind. Die Brenner von Pelletsöfen und Kesseln haben einen gewissen, aber konstruktionsbedingt recht kleinen Regelbereich. Dabei sind die Zufuhrschnecken die die Pellets in den Feuerungsraum befördern in aller Regel volumetrisch geregelt und voreingestellt. Das heißt, wenn der Heizwert der Pellets pro Volumeneinheit signifikant (mehr als etwa 3%) höher ist als der von nicht behandelten Holzpellets, dann kann es sein, dass zu viel Energie dem Brenner zugeführt wird. Die Folge ist dann, dass die Heizanlage häufig nicht mehr ausreichend nachregeln kann, und Luft- bzw. Sauerstoffmangel im Feuerungsraum entsteht. Dadurch wir die Verbrennung unsauber, es entstehen mehr Abgase mit der Gefahr von Schlackebildung. Insofern ist darauf zu achten, dass die Zugabemenge eines heizwerterhöhenden Additives so niedrig wie möglich/nötig gehalten wird. Bei Versuchen mit beispielsweise Rapsöl reichten bereits 1 bis3 Liter pro Tonne (entspricht ca. 0,1 - 0,3 %) als Sprühnebelapplikation in die Blasleitung aus, um die gewünschten Vorteile zu erreichen. Hierbei liegt die rechnerische Erhöhung des Heizwertes bei nur 0,2 % bis 0,6 % pro Volumeneinheit. Die benötigte Menge hängt dabei insbesondere von der Qualität der Holzpellets ab. Schlechtere Pellets, welche einen höheren Abrieb und Staubanteil aufweisen bzw. beim Transport erzeugen, benötigen mehr Additiv.

Da es sich bei Holzpellets um einen ökologischen Brennstoff handelt, sind natürliche Substanzen jedenfalls vorzuziehen. In diesem Sinne ist es vorteilhaft, wenn das umhüllende Additiv eine Mischung von Wasser mit gequollener Stärke und/oder Gelatine und/oder Leim aufweist. Verbessert wird die Wirkung durch die Senkung der Oberflächenspannung mittels eines Tensides. In der Praxis wird ein wasserbasiertes Additiv voraussichtlich keine Umsetzung erfahren, da es schon bei leichter Überdosierung oder Tröpfchenbildung zum Aufquellen der Pellets führt. Dieses leichte und schnelle Aufquellen haben wir bei der Verwendung von Ölen, Wachsen oder Harzen nicht beobachten können.

Einen zusätzlichen Vorteil bringt es mit sich, wenn man die Sprühvorrichtung an einer Stelle der Blasleitung anbringt, nach dem die Pellets aus dem Tank in die Förderleitung zufließen. Dadurch ist der Sprühnebel vor dem eigentlichen Kontakt mit den Pellets bereits gleichmäßig mit der Blasluft vermischt.

Der Effizienz des Staubbindeprozesses kommt zugute, dass die Strömungsgeschwindigkeit der Luft in den Blasrohren wesentlich (etwa Faktor 10) größer ist, als die Fließgeschwindigkeit der Pellets (Pellets = ca. 5 m/sec, Luft > 50 m/sec). Zusätzlich muss sich die Luft quasi durch die Porengänge der Pellets hindurch schlängeln, mit vielen und dauernden Richtungs- und Geschwindigkeitsänderungen. Fotographien von fließenden Pellets in der Blasleitung haben gezeigt, dass die Pellets relativ gleichmäßig verteilt und separiert in einem im Luftstrom schweben. Dadurch besteht in der Leitung eine sehr hohe und gleichmäßige Kollisionswahrscheinlichkeit der Pellets bzw. Partikel mit den Sprühnebel- Tröpfchen. Darüber hinaus beschlagen die Wandungen der Blasleitungen mit einem dünnen Ölfilm. Dieser lässt die Pellets zusätzlich leichter an den Wandungen gleiten, und Staub und Bruch kann sich auch hier anhaften, bevor er von Pellets wieder mitgerissen und gebunden wird. Insgesamt reduziert sich der Feinstaubanteil dadurch sehr stark.

Als Sprühflüssigkeiten haben sich beispielsweise bewährt:
pflanzliche Öle, Rapsöl, Leinöl, Sonnenblumenöl
mineralische Öle wie z.B. Glycerin, Paraffinöle,
wasserbasierte Additive auf Basis gequollener Stärke oder Gelatine
Wachsemulsionen und Fette

Ein zusätzlicher Vorteil ist, dass die komprimierte Luft in den Blasleitungen erhitzt ist. Dadurch können auch Stoffe eingesetzt werden, die bei Raumtemperatur normalerweise halbfest oder fest aber nicht spröde sind. Diese müssen allerdings in einem Vorratsbehälter vorgewärmt werden (Fette, Wachse Sterine usw.). Die weiteren Vorteile der erfindungsgemäßen Bearbeitung von Trockenbrennstoffen vermittels dem vorliegenden Verfahren sind: Der Reibungswiderstand der Pellets in Schüttungen ist reduziert, dadurch verbessert sich die Fließfähigkeit der Pellets im Lagerraum/Silo. Der ölige Überzug schmiert die Blasleitungen und die Fördereinrichtungen zu den Heizbrennern (Schnecken, Spiralen, Saugleitungen). Die Öle ziehen nach unseren Beobachtungen nicht gänzlich ins Innere der Pellets, ein dünner "Schmierfilm" bleibt dauerhaft erhalten (kaum Hohlräume in den extrem verdichteten Presslingen). Die leichte Erhöhung der Pelletstabilität reduziert den entstehenden Abrieb auch nach dem Einblasen der Pellets in das Endverbraucherlager, von welchem die Pellets dann noch ein letztes Mal bis zum Brenner - teils über mehrere Stationen - befördert werden müssen.

Die erfindungsgemäße Vorrichtung ist in Anspruch 4 definiert.

Bei einer vorteilhaften Weiterbildung der erfindungsgemäßen Vorrichtung ist vorgesehen, dass die Zugabe des staubbindenden Additives unmittelbar nach dem Eintritt des Trockenbrennstoffes in eine Förderleitung erfolgt.

Bei einer besonders bevorzugten Weiterbildung stellt die erfindungsgemäße Vorrichtung ein auf der Strasse oder einem Wasserweg fahrbares Nutzfahrzeug dar.

Weitere Vorteile, Zweckmäßigkeiten und Weiterbildungen der Erfindung ergeben sich aus den weiteren Unteransprüchen.

Weitere Einzelheiten ergeben sich aus der nachfolgenden Beschreibung eines Ausführungsbeispieles anhand der Zeichnung. Es zeigt:
- Fig. 1: eine schematische Schnittansicht eines Ausführungsbei- spieles der Erfindung; und
- Fig. 2: eine schematische Schnittansicht eines weiteren Ausfüh- rungsbeispieles der Erfindung.

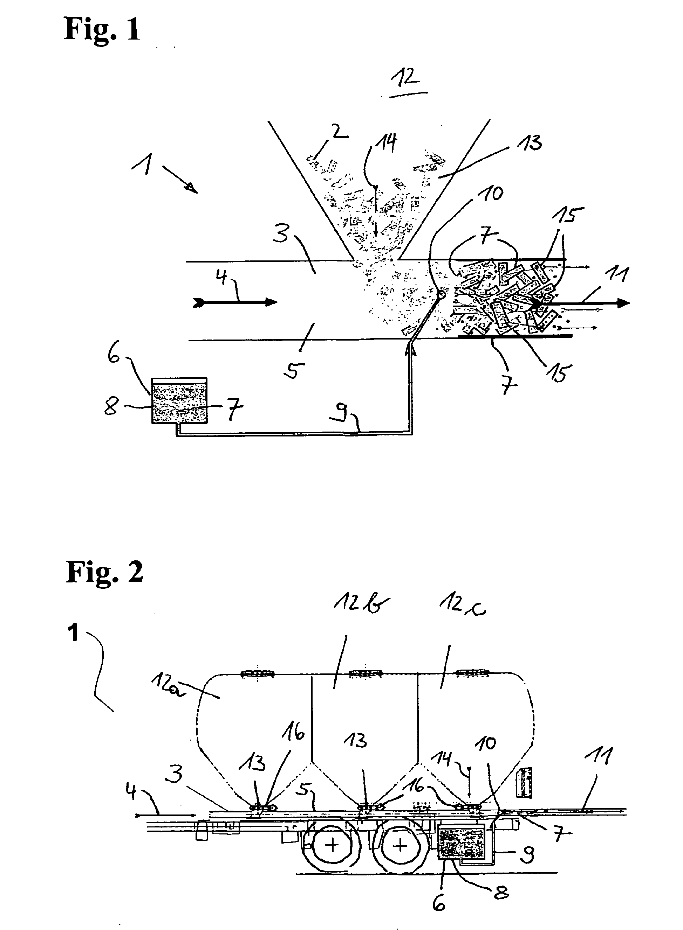

Die in den Figuren 1 und 2 dargestellte erfindungsgemäße Vorrichtung 1 für den Transport und/oder die Lagerung eines Trockenbrennstoffes 2, insbesondere eines Holzpellet, weist eine Fördereinrichtung 3 auf, welche den Trockenbrennstoff 2 mittels eines Fördermediums, nämlich eines von einer (in den Figuren nicht näher dargestellten) Hoch- oder Niederdruckquelle gespeisten und in einer Blasleitung 5 geführten Luftstroms (Pfeil 4) transportiert, wobei der Fördereinrichtung 3 eine Zugabeeinrichtung 6 zugeordnet ist, mit welcher dem den Trockenbrennstoff 2 transportierenden Fördermedium 4 ein umhüllendes Additiv 7 zugesetzt wird, und zwar wird das Additiv 7 dem Luftstrom 4 in Form eines Sprühnebels zugegeben. Die Zugabeeinrichtung 6 weist einen unter einem vorbestimmten Druck stehenden Additivtank 8 auf, der ausgangsseitig über eine Additivzuleitung 9 eine in der Blasleitung angeordnete Zerstäuberdüse 10 speist. Der von der Zerstäuberdüse 10 abgegebene Sprühnebel 7 wird dabei in Abhängigkeit der Transportstrecke hinsichtlich der Menge und der Tropfengröße des Sprühnebels 7 eingestellt.

Die in der Pelletskammer 12 gelagerten Trockenbrennstoffe 2 "fließen" über einen an der Unterseite der Pelletskammer angeschlossenen trichterförmigen Kammerauslaß 13 in die Blasleitung 5 (gemäß Pfeil 14) und werden gegebenenfalls über weitere, nicht näher dargestellte Schlauchleitungen gemäß Pfeil 11 zu einem (ebenfalls nicht dargestellten) Pelletslager eines Wohnhauses transportiert werden. Die Zugabe des Additives 7 erfolgt unmittelbar nach dem Eintritt 13 des Trockenbrennstoffes in die Förderleitung 5. Die Blasleitung 5 und alle daran angeschlossenen Leitungen und Schläuche werden mit dem Additiv überzogen. Dieser Überzug 15 wirkt festigkeitserhöhend, staubbindend, senkt den Gleitwiderstand der Trockenbrennstoffe, und bewirkt eine Verringerung von Bruch und Abrieb. In der Blasleitung 5 binden sich die Staubpartikel an dem Trockenbrennstoff 2 und an größeren Partikeln. Der Trockenbrennstoff 2 wird an seiner Oberfläche mit dem staubbindenden Additiv 7 dergestalt mit dem Überzug 15 überzogen, dass die Oberfläche des Trockenbrennstoffes 2 mehr Elastizität, Abriebfestigkeit, Gleitfähigkeit, und eine durch Anhaftung bindende Eigenschaft gegenüber Staub bekommt.

In Fig. 1 ist in schematischer Schnittansicht die grundsätzliche Wirkungsweise der Erfindung aufgezeigt.

Fig. 2 zeigt ein bevorzugtes Ausführungsbeispiel der erfindungsgemäßen Vorrichtung 1 in Form eines Silolastkraftwagen mit drei Pelletskammern 12a, 12b, 12c, wobei die Auswahl einer Pelletskammer mit einem Schieber 16 zum Öffnen der gewünschten Pelletskammer 12a, 12b, oder 12c erfolgen kann.

## Patentansprüche

1. Verfahren zur Bearbeitung eines Trockenbrennstoffes (2), insbesondere von Holzpellets (2), **dadurch gekennzeichnet, dass** dem den Trockenbrennstoff (2) transportierenden Fördermedium (4) ein elastizitätserhöhendes, die Materialspannungen senkendes, und zugleich schmierendes und staubbindendes Additiv (7) zugesetzt wird, wobei
das den Trockenbrennstoff (2) transportierende Fördermedium (4) einen von einer Hoch- oder Niederdruckquelle gespeisten Luftstrom (4) aufweist, und das Additiv (7) dem Luftstrom (4) in Form eines Sprühnebels zugegeben wird.

2. verfahren nach Anspruch 1, **dadurch gekennzeichnet, dass** die Zugabe des Additives (7) unmittelbar nach dem Eintritt des Trockenbrennstoffes (2) in eine Förderleitung (5) erfolgt.

3. Verfahren nach einem der vorhergehenden Ansprüche, **dadurch gekennzeichnet, dass** das staubbindende Additiv (7) dem Trockenbrennstoff (2) in der Blasleitung (5) eines Fahrzeuges, insbesondere eines Straßen- oder Schienen-Silo-Pump-Wagen oder Transportschiffes vor oder nach dem Zulauf zugegeben wird.

4. Vorrichtung für den Transport eines Trockenbrennstoffes (2), insbesondere von Holzpellets mit einer Fördereinrichtung (3), welche den Trockenbrennstoff (2) mittels eines Fördermediums (4), transportiert, **dadurch gekennzeichnet, dass** der Fördereinrichtung (3) eine Zugabeeinrichtung (6) zugeordnet ist, mit welcher dem den Trockenbrennstoff (2) transportierenden Fördermedium (4) ein elastizitätserhöhendes, die Materialspannungen senkendes und zugleich staubbindendes Additiv (7) zugesetzt wird, und
das den Trockenbrennstoff (2) transportierende Fördermedium (4) einen von einer Hoch- oder Niederdruckquelle gespeisten Luftstrom aufweist, und das Additiv (7) dem Luftstrom in Form eines Sprühnebels zugegeben wird.

5. Vorrichtung nach Anspruch 4, **dadurch gekennzeichnet, dass** die Zugabe des staubbindenden Additives (7) unmittelbar nach dem Eintritt (13) des Trockenbrennstoffes (2) in eine Förderleitung (5) erfolgt.

6. Vorrichtung nach einem der Ansprüche 4 oder 5, **dadurch gekennzeichnet, dass** das Additiv (7) an mehreren unterschiedlichen Stellen in der Transportstrecke eingebracht wird.

## Claims

1. Method for processing a dry fuel (2), in particular wood pellets (2), **characterised in that** there is added to the conveying medium (4) which transports the dry fuel (2) an additive (7) which increases elasticity, which reduces the material loads and which at the same time is lubricating and dust-binding, the conveying medium (4) which transports the dry fuel (2) having an air flow (4) which is supplied by a high or low pressure source, and the additive (7) being added to the air flow (4) in the form of an atomised spray.

2. Method according to claim 1, **characterised in that** the addition of the additive (7) is carried out directly after the introduction of the dry fuel (2) into a conveying line (5).

3. Method according to either of the preceding claims, **characterised in that** the dust-binding additive (7) is added to the dry fuel (2) in the blow line (5) of a vehicle, in particular a road or rail type silo pump vehicle or transport ship before or after the inlet.

4. Device for the transport of a dry fuel (2), in particular wood pellets, having a conveying device (3) which transports the dry fuel (2) by means of a conveying medium (4), **characterised in that** there is associated with the conveying device (3) a supply device (6) by means of which there is added to the conveying medium (4) which transports the dry fuel (2) an additive (7) which increases elasticity, which reduces the material loads and which at the same time is dust-binding and the conveying medium (4) which transports the dry fuel (2) has an air flow which is supplied by a high or low pressure source, and the additive (7) is added to the air flow in the form of an atomised spray.

5. Device according to claim 4, **characterised in that** the addition of the dust-binding additive (7) is carried out directly after the introduction (13) of the dry fuel (2) into a conveying line (5).

6. Device according to either of claims 4 or 5, **characterised in that** the additive (7) is introduced in the transport path at a plurality of different locations.

## Revendications

1. Procédé pour le traitement d'un combustible solide (2), en particulier de granulés de bois (2), **caractérisé en ce qu'**un additif (7) antipoussière augmentant l'élasticité, diminuant les tensions de matériau tout en ayant des propriétés lubrifiantes est ajouté au milieu de transport (4) véhiculant le combustible solide (2), sachant que
le milieu de transport (4) véhiculant le combustible solide (2) présente un flux d'air (4) alimenté par une source haute pression ou basse pression, et que l'additif (7) est ajouté au flux d'air (4) sous la forme d'un brouillard de fines gouttelettes.

2. Procédé selon la revendication 1, **caractérisé en ce que** l'addition de l'additif (7) est effectuée directement après l'entrée du combustible solide (2) dans une conduite de transport (5).

3. Procédé selon l'une quelconque des revendications précédentes, **caractérisé en ce que** l'additif (7) antipoussière est ajouté avant ou après l'amenée, au combustible solide (2) dans la conduite de soufflage (5) d'un véhicule, en particulier d'un véhicule rail-route à silos ou d'un navire porte-barges.

4. Dispositif pour le transport d'un combustible solide (2), en particulier de granulés de bois, équipé d'un système de transport (3), lequel véhicule le combustible solide (2) au moyen d'un milieu de transport (4), **caractérisé en ce qu'**un système d'addition (6) est associé au système de transport (3), lequel système d'addition permet d'ajouter au milieu de transport (4) véhiculant le combustible solide (2), un additif (7) antipoussière augmentant l'élasticité, diminuant les tensions du matériau, et **en ce que** le milieu de transport (4) véhiculant le combustible solide (2) présente un flux d'air alimenté par une source haute pression ou basse pression, et **en ce que** l'additif (7) est ajouté au flux d'air sous la forme d'un brouillard de fines gouttelettes.

5. Dispositif selon la revendication 4, **caractérisé en ce que** l'addition de l'additif (7) antipoussière est effectuée directement après l'entrée (13) du combustible solide (2) dans une conduite de transport (5).

6. Dispositif selon l'une quelconque des revendications 4 ou 5, **caractérisé en ce que** l'additif (7) est apporté en plusieurs endroits différents sur le trajet du transport.
